# EUROPEAN PATENT APPLICATION

(11) **EP 1 998 300 A2**
(43) Date of publication of application: **03.12.2008**
(21) Application number: 08251800.2
(22) Date of filing: 23.05.2008
(51) Int. Cl.: G08B 7/06

(54) **Utility outlets having dynamically changing emergency evacuation routing**

(30) Priority: 24.05.2007 US 939946 P
(71) Applicant: Optimal Innovations Inc, Bridgetown (BB)
(72) Inventor: Schoettle, Roland, Freeport (BS)
(74) Representative: Jackson, Richard Eric

(57) **Abstract**

Devices, systems and methods that are capable of dynamically indicating emergency evacuation routes in a premises. In the premises, utility outlets such as electrical sockets and light switches are used to indicate, visually and/or audibly, an evacuation route. The use of utility outlets to indicate the evacuation routes takes advantage of devices that must be installed in virtually all buildings at predictable locations.

## Description

### CROSS-REFERENCE TO RELATED APPLICATIONS

This application claims priority from U.S. Provisional Patent Application No. 60/939,946, filed May 24, 2007, the disclosure of which is hereby incorporated herein by reference. The present application is also related to co-pending, and commonly assigned U.S. Patent Application No. 11/683,304, entitled "SYSTEMS AND METHODS FOR LINKING UTILITY CONTROL DEVICES;" U.S. Patent Application No. 11/683,327, entitled "SYSTEM AND METHOD FOR INFRASTRUCTURE REPORTING;" U.S. Patent Application No. 11/683,298, entitled "LIGHT SWITCH USED AS A COMMUNICATION DEVICE;" U.S. Patent Application No. 11/683,308, entitled "SYSTEM AND METHOD FOR PREMISES MONITORING USING WEIGHT DETECTION;" U.S. Patent Application No. 11/683,326, entitled "ANTICIPATORY UTILITY CONTROL DEVICE;" U.S. Patent Application No. 11/683,335, entitled "PLUG AND PLAY UTILITY CONTROL MODULES;" U.S. Patent Application No. 11/683,354, entitled "SYSTEM AND METHOD FOR SUBSTITUTING DATA IN RESPONSES TO INTERNET INQUIRIES;" U.S. Patent Application No. 11/696,625, entitled "SYSTEM AND METHOD FOR INCREASING THE EFFICIENCY IN THE DELIVERY OF MEDIA WITHIN A NETWORK;" and U.S. Patent Application No. XX/XXX,XXX, Attorney Docket No. 66816/P020US/10703550, entitled "ENTERPRISE CONTROLLED INTERNAL ROUTING OF ANALOG AND VOIP COMMUNICATIONS," the disclosures of which are hereby incorporated herein by reference.

### TECHNICAL FIELD

The current disclosure relates to utility outlets. More specifically, the current disclosure is directed to the use of utility outlets to indicate emergency evacuation routes.

### BACKGROUND OF THE INVENTION

In the event of an emergency in a building, safety procedures typically require immediate evacuation. Where the building is large and/or the occupants are not familiar with the building, directing the occupants out of the building is of primary concern. Accordingly, property owners or building occupiers usually provide a diagram or copy of evacuation routes applicable to evacuation from particular locations in a building. For example, hotels provide evacuation routes on the doors in the hotel room. Similarly, employers sometimes provide evacuation routes to employees.

While the procedure of posting or publishing evacuation routes may enhance safety in an emergency, there are certain situations in which these procedures are inadequate. For example, a visitor to a building would not usually have access to the evacuation routes published to employees. Further, an occupant of a building may be in an area, such as a passageway, where no evacuation route is posted. Even when an occupant of a building has access to evacuation routes, those publications and postings are necessarily prepared prior to the emergency. Therefore, where there is more than one possible evacuation route from a particular location, the existing evacuation route publications or postings typically display a previously determined preferred evacuation route. Significantly, the previously determined preferred route may be the most dangerous of the possible routes in a particular emergency. In other words, a preferred route may become the most dangerous route based on the location of the cause of the emergency. For example, a fire may have engulfed the passageway of a preferred evacuation route. Accordingly, in a scenario where there are optional routes, the existing systems do not provide a means of indicating the safest routes based on the circumstances at the time of the emergency.

Further, smoke alarms, although very useful for determining the existence of fire, are typically poor at determining the room or location of the fire. This is because most smoke detectors work either by optical detection and/or by ionization detection methods. They do not detect heat/fire directly, and because smoke particles travel much quicker than fire or heat, smoke detectors are very poor at discriminating where a fire actually is. Because authorities require only a relatively few smoke alarms for large buildings, the challenge of fire location in those buildings is exacerbated yet further. The above discussion also applies to other emergencies, such as gas leak, biohazards, chemical agents, terrorist attacks, and more.

In environments such as the home, it is not practical to post evacuation routes. Even if such routes were to be posted, some occupants, such as young children, might not be able to read or remember the route. Further, once the emergency condition exists it is usually too late (or too smoky) for anyone to stop and read the posted route information. Compounding the problem even further is the fact that when smoke or chemicals reduce visibility, occupants of the premises, whether it be a room in a home, a room in a public facility or an office or hallway in a work environment, can become confused as to the nearest exit and thus be trapped, or waste precious time trying to escape the problem area.

### BRIEF SUMMARY OF THE INVENTION

The present invention is directed to devices, systems and methods that are capable of dynamically indicating the safest emergency evacuation routing based on conditions occurring at the time of the emergency. Specifically, the system uses utility outlets, such as electrical sockets and light switches, to indicate (via visual or audible indicators) the safest evacuation route based on conditions existing during an emergency. The use of utility outlets for the evacuation routes takes advantage of devices that must be installed in virtually all buildings at predictable locations. In one embodiment, a signal is sent from a sensor to one or more wall mounted light switches or power outlets causing the switch or outlet to display, perhaps in conjunction with other light switches and/or outlets, the direction to the appropriate exit.

In another embodiment, the switches and outlets are coordinated to act in a systemic approach that allows each light switch and/or power outlet to flash (possibly with direction indicators to the closest viable exit) and/or wail faster and faster to indicate its proximity to a viable and appropriate exit.

The foregoing has outlined rather broadly the features and technical advantages of the present invention in order that the detailed description of the invention that follows may be better understood. Additional features and advantages of the invention will be described hereinafter which form the subject of the claims of the invention. It should be appreciated by those skilled in the art that the conception and specific embodiment disclosed may be readily utilized as a basis for modifying or designing other structures for carrying out the same purposes of the present invention. It should also be realized by those skilled in the art that such equivalent constructions do not depart from the spirit and scope of the invention as set forth in the appended claims. The novel features which are believed to be characteristic of the invention, both as to its organization and method of operation, together with further objects and advantages will be better understood from the following description when considered in connection with the accompanying figures. It is to be expressly understood, however, that each of the figures is provided for the purpose of illustration and description only and is not intended as a definition of the limits of the present invention.

### BRIEF DESCRIPTION OF THE DRAWINGS

For a more complete understanding of the present invention, reference is now made to the following descriptions taken in conjunction with the accompanying drawing, in which:

FIGURE 1 is a diagram of one embodiment of the current invention showing a utility outlet;

FIGURE 2 is a diagram illustrating the operation of one embodiment of the current invention showing an electrical switch;

FIGURE 3 is a diagram illustrating one embodiment of the current invention showing an electrical switch;

FIGURE 4 is a diagram illustrating the operation of one embodiment of the current invention;

FIGURE 5 is a diagram illustrating one embodiment of the current invention showing the combination of a utility outlet and a face plate.

FIGURE 6 is a diagram illustrating one embodiment of the current invention as applied to a building with multiple exit routes.

FIGURE 7 is a diagram illustrating one embodiment of the current invention showing the steps in dynamically displaying an evacuation route.

### DETAILED DESCRIPTION OF THE INVENTION

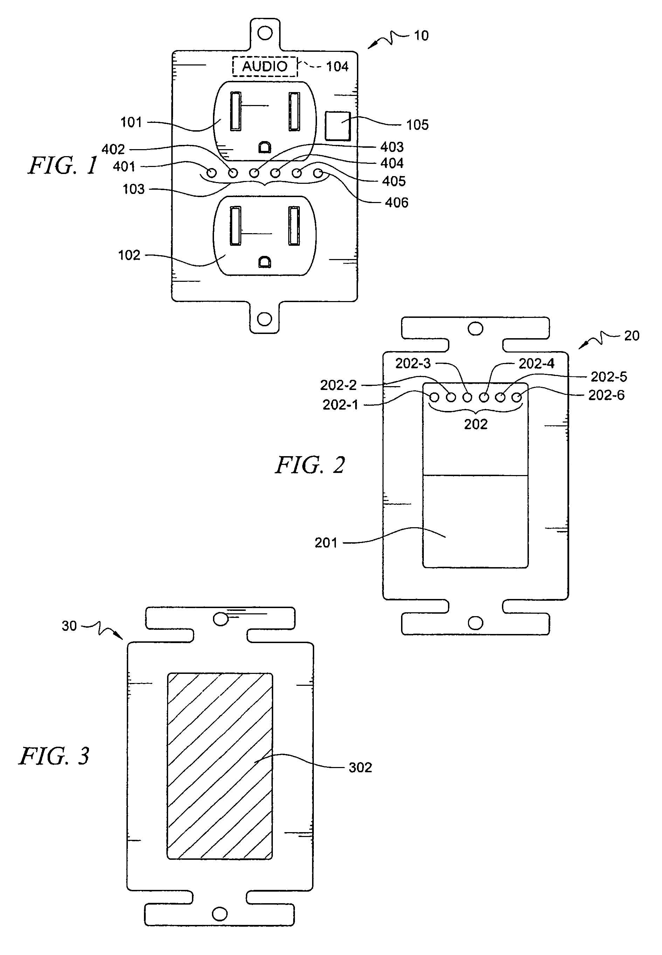

FIGURE 1 is a diagram of one embodiment of the current invention showing a utility outlet. In this embodiment, utility outlet 10 has the primary purpose of providing a connection to a power source. Plugs are inserted into sockets 101 or 102 in the conventional manner so as to allow power to flow from the socket through the plug to the device being powered. In addition to serving as connection to a power source, utility outlet 10 serves as a device to indicate an evacuation route in the event it receives a signal that there is an emergency condition. The emergency signal may be received either via a power cable, a separate communication cable, wirelessly or from a device within the socket itself. When the emergency signal is received, the utility outlet displays the evacuation route by illuminating some light signal such as, for example, apparatus 103. Illumination apparatus 103 can be a single light source or it may comprise several individual light sources, such as illumination devices 401 to 406. Illumination devices 401 to 406 may illuminate all at once, constantly or intermittently. Concurrent illumination (constantly or intermittently) would, for example, be appropriate where the utility outlet is located close to an exit in a building and the utility outlet serves the purpose of identifying the location of that exit. Additionally, however, each of illumination devices 401 - 406 can illuminate consecutively in a way to indicate a certain direction. Alternatively, illumination apparatus 103 could be in the shape of an arrow that indicates a direction by constant or intermittent illumination. Touch sensitive plate 105 may be used to turn the illumination apparatus 103 and device 104 on or off. Touch sensitive plate 105 may also be used to turn the illumination apparatus and audio devices of other utility outlets on or off. It should be noted that the face plate used to cover the utility outlet when installed would have sufficient open space to allow easy visibility of illumination apparatus 103 and access to touch sensitive plate 105. Device 10 can have, if desired, an audio device, such as device 104 which can provide sound, voice, or some coordination thereof. The sound can act with an illumination source or separately therefrom to indicate a direction out of a premises.

FIGURE 2 illustrates an electrical switch, such as switch 20, used to switch electrical current to a lighting circuit or device. Switch 20 can also provide a means of indicating an evacuation route in case of an emergency. Electrical power to the controlled device is switched by pressing the actuator 201. To indicate an evacuation route, upon the receipt of an emergency signal, electrical switch 20 activates an illumination apparatus 202 located on actuator 201. Illumination apparatus 202 comprises, in this example, several illumination devices 202-1 to 202-6. Illumination apparatus 202 may activate in different ways to indicate an emergency. That is, the illumination devices 202-1 to 202-6 may illuminate all at once, constantly or intermittently and, as discussed above with respect to the device shown in FIGURE 1, can indicate the direction of evacuation.

FIGURE 3 illustrates one embodiment 30 showing an electrical switch wherein all of the outwardly visible portions of actuator 302 serve as an illumination device. In this scenario, after being activated by a signal of an emergency condition, actuator 302 illuminates constantly or intermittently. The embodiment illustrated in FIGURE 3 takes advantage of the fact that, typically, switches are located close to exits. Accordingly, illuminating the actuator of the switch during the time of an emergency indicates the exit. This illumination can be of a particular color, a strobe, a very bright light, or any combination thereof.

It should be noted that in some embodiments any or all of the utility outlets can give off a sound (or even a verbal command) to aid the occupant to move towards an outlet where, for example, in the case of fire, smoke prevents viewing the utility outlet from a distance. This would also help the visually impaired to evacuate. In one embodiment, the sound could be used as a means to direct the occupant closer to the utility outlet so that the direction of exit as indicated by the device could be observed. Alternatively, the sound can be used as an indicator of the direction in which to evacuate. In other words, only the utility outlets in the direction of an exit furthest away from the source of danger would emit a sound, thus leading the occupant away from the most dangerous exits.

In another embodiment, each switch and/or socket could be established to work together with all other switches and/or sockets within the same area or room. In this mode, each switch and/or socket would emit loud sounds and light that would pulse or point with increasing frequency and/or duration as an indicator toward a viable exit. The switch or socket closest to the viable exit could be set to operate continuously. In yet another embodiment, each switch or socket could be silenced momentarily (using programmable times, e.g. 10 seconds) so as to allow for easier hearing of the next switch or socket with a higher frequency and/or duration, indicating the direction to a viable exit. The switch or socket may have a touch sensitive plate to turn the switch or socket on or off. This touch sensitive plate could also serve as a means by which an occupant activates or deactivates the illumination apparatus or audio device of other switches. In the event there is more than one viable exit, the one closest to the switch or socket will be chosen automatically.

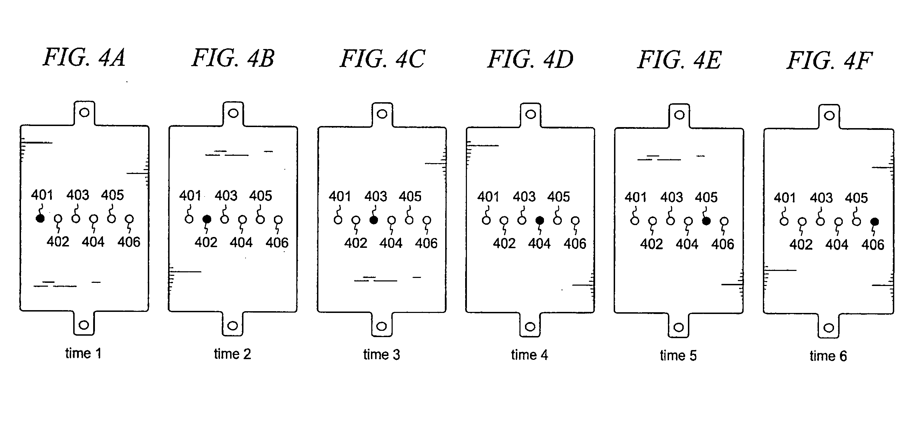

FIGURES 4A through 4F illustrate the operation of the set of illumination devices 401 to 406 positioned on control device 10. Illuminating the devices 401 to 406 consecutively in a particular direction visually indicates that the occupant should move in that direction. For example, in FIGURE 4A at time 1, only illumination device 401 is illuminated. FIGURE 4B shows time 2 in which illumination device 401 is no longer illuminated, and illumination device 402 is the only device illuminated. FIGURES 4C through 4F show progressive frames until illumination device 406 is illuminated. At that point the process starts over with illumination device 401. The consecutive illumination of devices 401 to 406 occurs rapidly and repeatedly, thereby creating the effect of a flow from left to right in this example. The occupant is thus urged to move to his/her right along the wall where the outlet is positioned. Reversing the sequence of illuminating the illumination devices would, accordingly, show a flow from right to left encouraging the occupant to move in the opposite direction, i.e. to his/her left.

FIGURES 4A to 4F illustrate a single outlet 10 having consecutive lights to show a direction out of the area. However, multiple outlets 10 can be used to create an apparent movement of lights along a wall leading an occupant along the evacuation route.

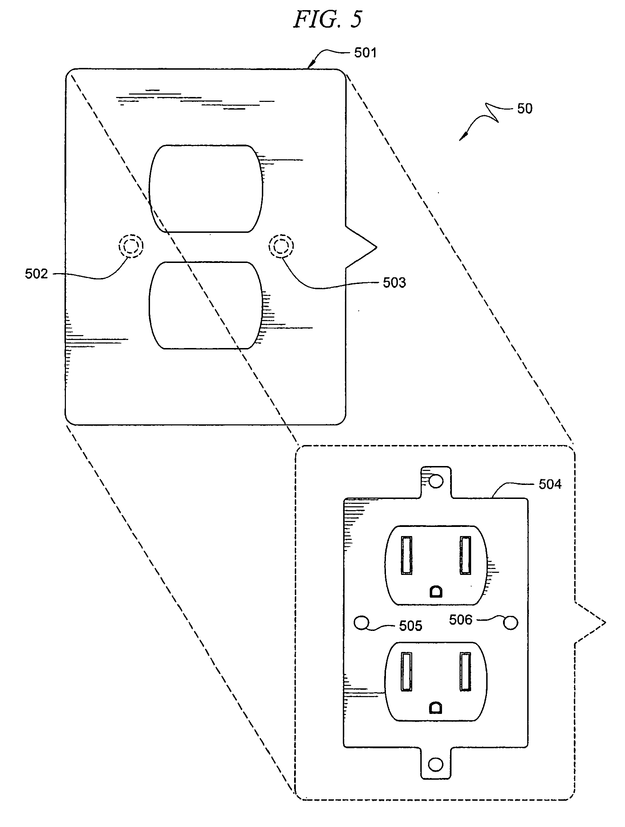

FIGURE 5 is a diagram illustrating one embodiment 50 showing a combination of a utility outlet 504 and faceplate 501 for utility outlet 504, serving as a way of indicating an evacuation route in the event of an emergency. In this embodiment, face plate 501 is shaped to point in a particular direction. The utility outlet and faceplate would be installed in a building so that the pointed portion would point towards the exit. For example, a utility outlet installed in a room where there is one door would point to the door. The surface of faceplate 501 could be an illumination device. Additionally, the shape of the plate is raised from the wall or otherwise easily discernible from the wall by touch. Apart from helping persons who cannot see because of the emergency conditions, this would also help visually impaired persons to find the exit. It should be noted that the pointed portion alone could be the illuminated portion, or the entire faceplate can be made to illuminate during an emergency.

In this embodiment, utility outlet 504 serves as a power socket in a traditional manner and also has the capability of receiving a signal of an emergency condition via either a power cable, a separate communications cable or from an internal sensor. The received signal is communicated to the faceplate, for example, by contacts 505 and 506 that mate with contacts 502 and 503, respectively. The faceplate is thereby activated to illuminate and display an evacuation route. It should be noted that utility outlet 504 and faceplate 501 may be connected to each other by any means that facilitates the emergency signal being transmitted from utility outlet 504 to the faceplate 501.

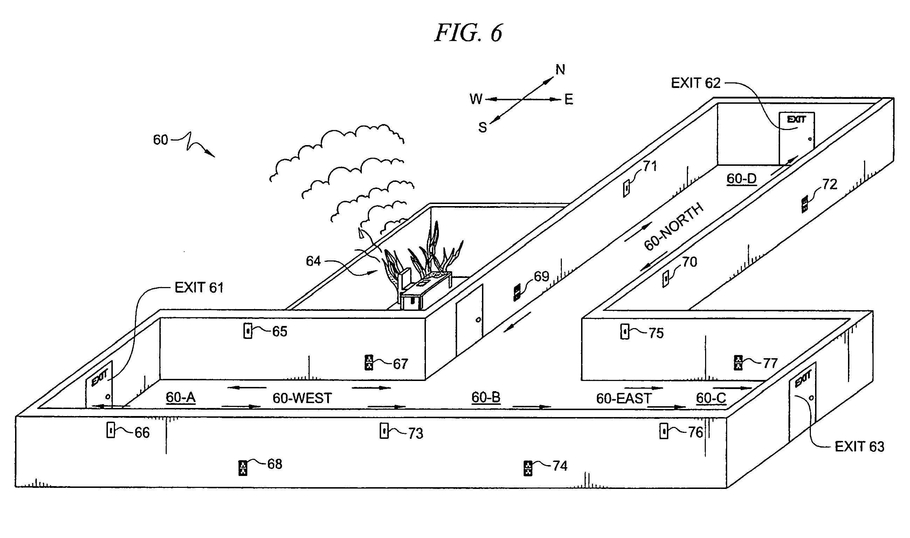

FIGURE 6 is a diagram illustrating one embodiment as applied to building 60 with multiple exit routes. FIGURE 6 depicts passageways 60-West, 60-East, and 60-North in building 60. In this embodiment of the current invention, a system of utility outlets indicates evacuation routes away from the source of danger. In this example, there is a fire in location 64. In this embodiment, utility outlets/switches 65 through 77 are visible from the passageways. Utility outlets/switches 65 through 77 receive signals from a fire alarm system that there is a fire in the building and that smoke was detected at location 64. Alternatively, if devices 65 through 77 are equipped with heat detectors, device 69 would detect that a fire is in location 64, initiates an alarm and send signals to the other devices 65-68 and 70-77. Devices 65-77 would then indicate evacuation routes. It should be noted that the arrows beside utility outlets 65 through 77 show the direction that each utility outlet would indicate in this example. Where there are alternative evacuation routes, the utility outlet displays a particular direction based on a signal from the separate alarm system or from one of the devices 65-77.

An occupant in position 60-A would potentially have the option to exit via one of exits 61, 62 or 63. However, based on the fire being at location 64, a user in location 60-A can view utility outlet 66 and determine the safest way to go is in the direction of exit 61. Notably, an occupant in location 60-B will be directed by utility outlets 67 through 70 and 73 through 77 to go in an easterly direction away from exit 61 and towards exit 63. Similarly, the occupant in position 60-C will be directed away from exits 61 and 62 by utility outlets 74 through 77 and towards exit 63 in an easterly direction. In contrast, an occupant in position 60-D would be directed in a northerly direction away from exits 61 and 63 and towards exit 62 by utility outlets 71 and 72. Accordingly, the utility outlets in this embodiment provide a dynamic, location specific indicator as to the safest route.

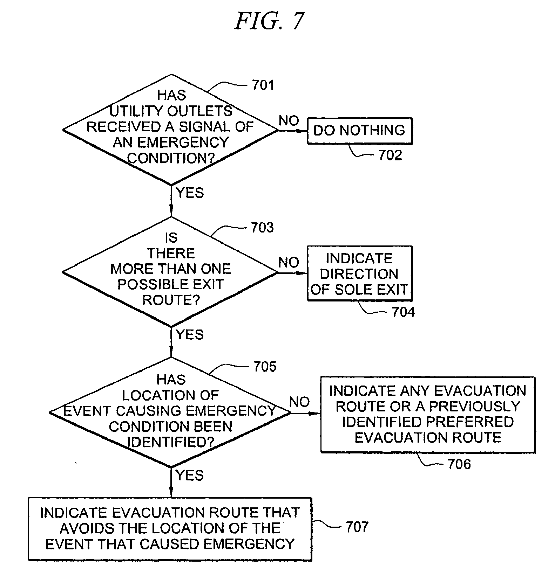

FIGURE 7 is a diagram illustrating one embodiment of the current invention and showing the steps in dynamically displaying an evacuation route. As an example, in this embodiment, a fire in a building is used as the emergency event. The flow chart in FIGURE 7 shows some of the steps a utility outlet may follow in displaying an evacuation route.

In process 701, the utility outlet determines whether a signal to illuminate has been received, from an emergency alarm system. If there is a signal that there is not an emergency condition, the system remains in a non-indicating (no light or sound) state. If there has been a signal received by the utility outlet that an emergency condition exists, then the utility outlet, in process 703, determines if there is more than one exit route that the utility outlet can indicate. If there is only one exit route, the utility outlet indicates the direction of the sole exit/evacuation route in process 704. If there is more than one exit route that the utility outlet can indicate, then in process 705, the utility outlet determines if the location of the event causing the emergency, in this case a fire, has been identified. In process 706, if the location of the fire is unknown to the utility outlet then the utility outlet indicates any evacuation route or an otherwise previously identified preferred evacuation route. If the location of the fire has been identified then, in process 707, the utility outlet indicates a direction along the safest of the possible evacuation routes.

It should be noted that any or all of the utility outlets may have, among other things, one or more of the following capabilities: detecting the source of danger, storing the evacuation routes, storing the location of other utility outlets, sending signals to other utility outlets, receiving signals from other utility outlets, coordinating with other utility outlets to display an evacuation route and controlling the illumination of other utility outlets. In one embodiment, the utility outlet may be able to detect the location of the emergency causing event by, for example, a heat detector in the case of a fire.

It should also be noted that although a fire was used here as an example of an emergency, the current invention also applies to emergencies such as hazardous chemical release, burglary, gas leaks, biohazards, terrorist attacks, etc. In all applicable emergency situations, the utility outlet may contain the device for detecting the emergency situation or rely on a separate emergency and alarm system for a signal that there is an existing emergency.

Although the present invention and its advantages have been described in detail, it should be understood that various changes, substitutions and alterations can be made herein without departing from the spirit and scope of the invention as defined by the appended claims. Moreover, the scope of the present application is not intended to be limited to the particular embodiments of the process, machine, manufacture, composition of matter, means, methods and steps described in the specification. As one of ordinary skill in the art will readily appreciate from the disclosure of the present invention, processes, machines, manufacture, compositions of matter, means, methods, or steps, presently existing or later to be developed that perform substantially the same function or achieve substantially the same result as the corresponding embodiments described herein may be utilized according to the present invention. Accordingly, the appended claims are intended to include within their scope such processes, machines, manufacture, compositions of matter, means, methods, or steps.

## Claims

1. A method of assisting in the evacuation of an area, said method comprising:
causing a device to provide indication toward an appropriate exit from said area, said utility device having at least one function other than to provide said indication.

2. The method of claim 1 wherein said device is a utility electrical socket connected to the permanent power wiring of said area.

3. The method of claim 1 wherein said device is a utility electrical light-switch connected to the permanent power wiring of said area.

4. The method of claim 1 wherein said device is a face plate.

5. The method of claim 1 wherein said indication is provided by at least one selected from the list of:
an activated visual display; and
an activated audible transducer.

6. The method of claim 1 wherein a shape of said device provides direction to an appropriate exit.

7. The method of claim 1 wherein said indication is produced by indicators covering the visible surface area of said utility device.

8. The method of claim 1 wherein said indication is produced by an indicator divided into portions, said portions illuminated separately and consecutively to indicate an appropriate exit.

9. The method of claim 1 wherein said indicator, when activated, indicates continuously.

10. The method of claim 1 wherein said activated indication is provided in sequence with at least one other utility device, said other utility device also having at least one function other than to provide said direction.

11. The method of claim 1 wherein said direction is provided tactilely.

12. The method of claim 1 wherein a set of said devices can be activated to provide a sequence of indicators wherein each device works together with others in the set to further indicate said direction.

13. The method of claim 12 wherein a specific utility device within said set of said utility devices can be temporarily stopped from sending audible indicators so as to allow a user to hear the next closest utility device within the set as per squeal intensity, direction, and rate.

14. A utility outlet for use within a premises, said utility outlet comprising:
means for connecting appliances to said premises electrical power;
means for accepting emergency condition signals; and
means for indicating an evacuation route in response to an accepted emergency condition signal.

15. The utility outlet of claim 14 wherein said emergency condition signal is received from a device remote from said utility outlet.

16. The utility outlet of claim 14 further comprising:
means for detecting emergency conditions and for generating said emergency condition signal.

17. The utility outlet of claim 14 further comprising:
means for determining a safest route of alternative evacuation routes.

18. A utility switch for use within a premises, said utility switch comprising:
means for connecting electrical devices to said premise electrical power;
means for accepting emergency condition signals; and
means for indicating an evacuation route in response to an accepted emergency condition signal.

19. The utility switch of claim 18 wherein said emergency condition signal is received from a device remote from said utility switch.

20. The utility switch of claim 18 further comprising:
means for detecting emergency conditions and for generating said emergency condition signal.

21. The utility switch of claim 18 further comprising:
means for determining a safest route of alternative evacuation routes.

22. A face plate for covering an electrical control device positioned within a utility outlet, said face plate comprising:
an indicator device; and
means for activating said indicator device upon receipt by said control device of an activation signal.

23. The face plate of claim 22 wherein said indicator device is selected from the list of:
a visible illumination device;
an audible transducer device.

24. The face plate of claim 22 wherein said indicator device provides direction to an appropriate exit from an area.

25. The face plate of claim 22 wherein the shape of said illumination device provides direction to an appropriate exit.

26. The faceplate of claim 22 wherein said illumination device covers at least a portion of a visible surface area of said face plate when said face plate is installed to cover said electrical control device.

27. The faceplate of claim 22 wherein said illumination device is divided into portions, said portions illuminated separately and consecutively to indicate an appropriate exit.

28. The face plate of claim 22 wherein said activated indication is provided in sequence with activated indications from at least one other face plate.

29. The face plate of claim 22 further comprising means for temporarily stopping said face plate from sending audible indicators so as to allow a user to hear the next closest face plate within a set of face plates.

30. A method of displaying an evacuation route within a premises, said method comprising:
detecting an emergency condition within a defined area;
sending a control signal to at least one device mounted at predictable locations within said defined area, said control signal indicative of a detected emergency condition; and
providing evacuation assistance by said at least one electrical utility control device.

31. The method of claim 30 wherein said device is a utility control device.

32. The method of claim 30 wherein said device is a face plate to an electrical control device.

33. The method of claim 30 wherein said emergency condition is detected by a device remote from said at least one electrical utility control device.

34. The method of claim 30 wherein said emergency condition is detected by said at least one electrical utility control device.

35. The method of claim 30 wherein said evacuation assistance comprises:
determining a safest of alternative evacuation routes from said defined area.

36. The method of claim 30 wherein said evacuation assistance involves the use of at least one of: sound and illumination.

37. An electrical power device comprising:
means for permanently connecting said device to the power wiring of a premises structure;
means for supplying power to a power consuming device;
means operable upon receipt of a control signal for activating, said activating selected from a list consisting of:
(1) illuminating at least a portion of a surface of said device, said surface being visible when said device is permanently connected to said power wiring, (2) audible indicating, said control signal not associated with a power consuming device to which said device is supplying power.

38. The electrical power device of claim 37 wherein said illuminating is produced by a display detachable from said device.

39. The electrical power device of claim 37 wherein said audible indicating is produced by a transducer detachable from said device.

40. The electrical power device of claim 37, wherein said illuminating is produced by a plurality of illumination devices.

41. The electrical power device of claim 37 wherein said audible indicating is produced by a plurality of audible indicating devices.

42. The electrical power device of claim 40, wherein said plurality of illumination devices are capable of illuminating consecutively to indicate an appropriate exit.

43. The electrical power device of claim 41 wherein said plurality of audible indicating devices are capable of announcing consecutively to indicate an appropriate exit.

44. An electrical switching device for use within a premises comprising:
means for controlling electricity flow in an electrical circuit in said premises;
means operable upon receipt of a control signal for illuminating at least a portion of a surface of said device, said surface being visible when said device is permanently connected to said electrical circuit.

45. The electrical switching device of claim 44 wherein said illuminating is produced by a display detachable from said device.

46. The electrical switching device of claim 44 further comprising:
audible indicating device operable under control of said control signal.

47. The electrical switching device of claim 46 wherein said audible indicating device comprises:
a transducer detachable from said device.

48. The electrical switching device of claim 44 wherein said illuminating is produced by a plurality of illumination devices.

49. The electrical switching device of claim 46 wherein said audible indicating is produced by a plurality of audible indicating devices.

50. The electrical switching device of claim 48 wherein said plurality of illumination devices are capable of illuminating consecutively to indicate said appropriate exit.

51. The electrical switching device of claim 49, wherein said plurality of audible indicating devices are capable of announcing consecutively to indicate an appropriate exit.

52. The electrical switching device of claim 51 wherein said announcement is continuous.

53. The electrical switching device of claim 51 wherein said announcement is intermittent.

54. The electrical switching device of claim 44 wherein said illuminating is continuous.

55. The electrical switching device of claim 44 wherein said illuminating is intermittent.
